# EUROPÄISCHE PATENTSCHRIFT

(11) **EP 2 409 960 B1**
(45) Veröffentlichungstag und Bekanntmachung des Hinweises auf die Patenterteilung: **04.09.2013**
(21) Anmeldenummer: 11180202.1
(22) Anmeldetag: 06.07.2007
(51) Int. Cl.: C04B 35/66, C04B 35/043, C04B 35/634, C04B 35/63, C04B 35/626

(54) **Gebinde mit einem feuerfesten Gießmassenversatz aus feuerfesten Rohstoffen sowie feuerfeste Gießmasse hergestellt aus dem Versatz**
Container with a fire-resistant cast compound offset made of fire-resistant raw materials and fire-resistant cast compound made from the offset
Gerbe dotée d'un mélange pour masse de coulée réfractaire constitué de matières premières réfractaires et masse de coulée réfractaire obtenue à partir dudit mélange

(30) Priorität: 08.07.2006 DE 102006031700
(43) Veröffentlichungstag der Anmeldung: 25.01.2012
(62) Teilanmeldung aus: 07787165.5
(73) Patentinhaber: Refratechnik Holding GmbH, 85737 Ismaning (DE)
(72) Erfinder: Jansen, Helge Dr., 37133 Friedland (DE); Aneziris, Christos Prof. Dr., 09599 Freiberg (DE); Dudczig, Steffen, 09618 Grosshartmannsdorf (DE)
(74) Vertreter: Solf, Alexander

(56) Entgegenhaltungen:
- EP-A- 0 763 508
- EP-A- 1 420 003
- EP-A1- 1 262 801
- EP-A2- 0 469 786
- DE-A1- 2 262 654
- DE-C1- 3 736 680
- FR-A- 1 471 790
- FR-A- 2 478 073
- GB-A- 2 409 450
- KR-A- 20040 056 568
- US-A- 4 071 593
- US-A- 4 233 079
- US-A- 4 939 188
- US-A- 5 030 595
- US-B1- 6 313 055
- DATABASE WPI Week 199422 Thomson Scientific, London, GB; AN 1994-180994 XP002468656, & SU 1 531 398 A1 (E REFRACTORIES IND RES DES INST) 7. Januar 1993 (1993-01-07)
- DATABASE WPI Week 198414 Thomson Scientific, London, GB; AN 1984-085231 XP002468657, & JP 59 035068 A (HARIMA TAIKA RENGA KK) 25. Februar 1984 (1984-02-25)

## Beschreibung

Die Erfindung betrifft ein Gebinde mit einem feuerfesten, vorzugsweise kohlenstoffhaltigen Gießmassenversatz aus einem Trockengemenge aus mindestens einem feuerfesten Rohstoff und mindestens einem unter Temperatureinwirkung eine Kohlenstoffbindung bewirkenden Bindemittel. Die Erfindung betrifft außerdem eine Gießmasse hergestellt aus dem Gebinde.

Feuerfeste Gießmassen im Sinne der Erfindung sind bildsame ungeformte Massen, die z. B. durch Vibration oder Rütteln oder Stampfen od. dgl. fließfähig sind oder gemacht werden können und dadurch verformbar sind und deren Bindemittelsystem unter Temperatureinwirkung verkokt, so dass daraus ein feuerfester Werkstoff, hauptsächlich bestehend aus den feuerfesten Rohstoffen und Graphit oder graphitähnlichen Kohlenstoffen resultiert.

Kohlenstoffgebundene Erzeugnisse finden einen breiten Einsatz als Auskleidung in metallurgischen Gefäßen, die z. B. als kohlenstoffgebundene Magnesiasteine im Konverter oder als Schlüsselbauteile, wie z. B. Tauchausgüsse oder Schieberplatten oder Stopfen oder Gießrinnen im Stranggussbereich. Kohlenstoffgebundene, feuerfeste Erzeugnisse werden weiterhin im Hochofenbereich in Transportgefäßen, wie z. B. Pfannen, oder in der chemischen Industrie oder in der Müllverbrennungsindustrie als temperaturfeste Rohre oder in der Zementindustrie als Auskleidungsmaterial eingesetzt. Als Binder dienen vorzugsweise Phenolharze wie z. B. Resole oder Novolake, Kunstpeche wie z. B. Carbores oder Steinkohlepeche oder Bitumen oder Kombinationen davon. Zur Optimierung der Oxidationsbeständigkeit von kohlenstoffhaltigen Erzeugnissen werden überwiegend metallische Additive wie z. B. Si oder Al oder Mg eingesetzt. In der Offenlegungsschrift DE 199 54 893 A1 werden kohlenstoffgebundene Erzeugnisse mit verbessertem Oxidationsverhalten beschrieben. Über die Zugabe einer katalytisch aktiven Substanz aus der Gruppe der leicht reduzierbaren Verbindungen der Übergangselemente, insbesondere Metallocene oder Metallobenzoate oder Metallonaphtenate des Kupfers, Chroms, Nickels oder Eisens in die Kunstharzkomponente wird bereits bei Temperaturen um 1000°C ein kristallin hochgraphitierter Kohlenstoff erzeugt, der zu verbesserten chemischen Eigenschaften verhilft.

Die ungeformten feuerfesten Baustoffe haben in den letzten 30 Jahren eine erhebliche Bedeutung erlangt. Mit einem Anteil von fast 45 % der Gesamtproduktion feuerfester Baustoffe sind sie eine wesentliche Gruppe der Feuerfestkeramik. Die ungeformten feuerfesten Baustoffe sind heute weitgehend hochwertige definierte Materialien, die qualitativ den geformten Erzeugnissen in keiner Weise unterlegen sind. Ungeformte feuerfeste Erzeugnisse bestehen aus einem Gemenge von körnigen festen Rohstoffen mit einer in der Regel definierten gezielten Kornverteilung und Bindemitteln. Die Verarbeitung bzw. Formgebung und die Temperaturbehandlung erfolgen am Einsatzort bzw. unter den Einsatzbedingungen. Eine Verarbeitung erfolgt direkt im Anlieferungszustand oder nach Zugabe einer notwendigen Flüssigkeitsmenge. Von großer Bedeutung sind dabei kohlenstoffhaltige Gießmassen aufgrund der hervorragenden mechanischen thermischen und chemischen Eigenschaften des Kohlenstoffs unter anderem die Nichtbenetzbarkeit gegenüber Metallen und Schlacken, die exzellente Thermoschockbeständigkeit usw. Außer Kohlenstoff oder kohlenstoffhaltige Bindemittel werden weitere oxidische und/oder nicht oxidische Körnungen ggf. mit weiteren speziellen Zusätzen zugemischt, die eine gute Oxidationsbeständigkeit gewährleisten. Diese kohlenstoffhaltigen Gießmassen oder bildsamen Massen werden entweder als ungeformte Erzeugnisse z. B. als monolithische Feuerfestausmauerung eingesetzt oder zu Erzeugnissen über die Gießformgebung oder über die bildsame Formgebung geformt. Bei Einsatz hydraulischer Bindemittel erfolgt durch Wasserzugabe ein Verfestigen und Aushärten im Raumtemperaturbereich durch eine Ausbildung wasserhaltiger Minerale.

Die rheologischen Eigenschaften sind für die Verarbeitbarkeit solcher Gießmassen oder bildsamen Massen von größter Bedeutung. Über die Zugabe von geeigneten Verflüssigern oder Stellmittel können die Fließeigenschaften solcher Massen eingestellt werden. Die größte Problematik entfaltet sich einerseits aus der Zusammenführung von oxidischen hydrophilen Verbindungen mit dem hydrophoben Graphit oder mit den hydrophoben kohlenstoffhaltigen Bindemitteln. Andererseits führt die Hydratation im Falle einer MgO-Zugabe als Zuschlagstoff insbesondere bei feinen Fraktionen zu einer Änderung des pH-Wertes und zu einer unerwünschten Gelierung. Dadurch wird die Formgebung erschwert und gleichzeitig führt die Brucit-Bildung am MgO-Korn zu einer Verschlechterung der mechanischen und thermischen Eigenschaften durch Zerklüftung des Gefüges.

In der Patentschrift DD 243 921 A5 wird eine rieselfähige, plastische, kohlenstoffhaltige, feuerfeste Masse beschrieben, die mit Hilfe von wärmehärtenden Kunstharzen in Erzeugnisse überführt wird. Für die Einstellung dienen bis zu 7 Gew.-% Gleit- und/oder Plastifizierungsmittel. In der Offenlegungsschrift DE 38 06 554 A1 wird ein Bindemittel auf Basis Fettsäure und reaktionsfähigem MgO für kohlenstoffhaltige Gießmassen offenbart. Schließlich wird in der DE 10 360 508 A1 die Steuerung der Graphiteinbringung sowie die Einstellung der rheologischen Eigenschaften über die Beschichtung der oxidischen Zusätze mit Kunstharzen und Graphit vorgeschlagen.

Bei allen bisherigen Ansätzen wird keine rheologische Abstimmung der Wechselwirkung zwischen hydrophoben und hydrophilen Bestandteilen angestrebt.

Es gibt nicht basische und basische feuerfeste Werkstoffe aus feuerfesten Rohstoffen, z. B. aus den feuerfesten Grundoxiden (Resistoroxiden) SiO₂, Al₂O₃, MgO, CaO, Cr₂O₃, SiC, ZrO₂ oder aus Mischungen daraus, die mit einem eine Kohlenstoffbindung erzeugenden Bindemittelsystem vermengt zu Gießmassen verarbeitet werden können. Insbesondere können nicht basische Werkstoffe auf Basis Al₂O₃-C und ZrO₂-C und Al₂O₃-MgO-C sowie basische Werkstoffe auf Basis MgO-C zum Einsatz kommen (C: steht für Kohlenstoff).

Die feuerfesten Werkstoffe bzw. Rohstoffe werden zu graphithaltigen Erzeugnissen in der Regel grobkeramisch verarbeitet. Dabei werden aus gebrochenem Gut durch Sieben Körner bzw. Granulate bestimmter Kornfraktionen erstellt und mit vorgegebenen Rohstoff- und Körnungsrezepturen unter Zugabe von Mehlkorn, Bindemitteln und vorzugsweise mindestens einem graphitischen Kohlenstoffträger sowie ggf. Antioxidantien und ggf. Wasser durch Mischen pressbare sowie vibrier- oder gießbare Gemenge hergestellt. In der Regel werden mehrere Kornfraktionen, z. B. Grobkornfraktionen, Mittelkornfraktionen, Feinkorn (< 100 µm) und Feinstkorn (< 10 µm) vermengt, um z. B. eine dichteste Packung zu erreichen, um bestimmte Eigenschaften wie z. B. die Temperaturwechselbeständigkeit oder Beständigkeit gegen Schlackeneinwirkung zu beeinflussen.

Bekannte Gießmassen erfordern ein Bindemittelsystem, das ein temporäres, primäres Abbinden in kaltem Zustand (Raumtemperatur) und eine Bindung bis zu Temperaturen gewährleistet, bei denen die Kohlenstoffbindung eines sekundären, temperaturhärtenden, verkokenden Bindemittels die Verfestigung der Masse übernimmt.

Alle bekannten sogenannten temporären, primären Bindemittel hinterlassen unter Temperatureinwirkung in verfestigenden Gießmassen Rückstände, die Eigenschaften des feuerfesten Endprodukts beeinträchtigen können, wenn diese von anderer chemischer Grundzusammensetzung sind wie das Resistormaterial.

Die US 4,233,079 offenbart eine wässrige Feuerfestmischung mit erhöhter Widerstandsfähigkeit gegen Verschlackung aus einem Trockengemenge, im Wesentlichen aufweisend einen feuerfesten Rohstoff in Form von Aluminiumoxid- oder Aluminiumsilikatgranulaten, Kohlenstoff, Siliziumpulver und Chromgrün. Die Feuerfestmischung weist zudem ein Bindemittel, z.B. Lignosulfonat oder Aluminiumsulfat, sowie ein weiteres Bindemittel z.B. Steinkohlenteerpech auf. Zusätzlich kann der Feuerfestmischung ein Netzmittel zugemischt werden. Eine Ausführungsform betrifft eine Gießmasse, aufweisend kalziniertes Bauxit, kalziniertes Aluminiumoxid, Graphit, Cyanit, Si-Metallpulver, geperltes Teerpech, Chromgrün, wässrige Lignosulfonatlösung und einen Wasseranteil.

In der US 5,030,595 ist eine ungeformte feuerfeste Masse insbesondere für einen feuerfesten Mauerstein zur Ofenauskleidung offenbart. Der feuerfeste Mauerstein weist ein feuerfestes Rohstoffgemenge aus Aluminiumsilikat, Aluminiumsilikat-Ton und Aluminiumoxid, ein Bindemittel, z.B. wasserlösliches Ammonium-Ligninsulfonat und einen Kohlenstoffträger in Form von feinteiligen Siliziumcarbid- und Kohlenstoffpartikeln, z.B. aus Erdölkoks, auf.

Die EP 0 763 508 A1 betrifft eine feuerfeste wasserhaltige Spritzmasse z.B. zur Anwendung in Hochöfen, aufweisend ein Trockengemenge aus einem feuerfesten Rohstoff vorzugsweise aus Sintermagnesia oder Schmelzmagnesia, einem Bindemittel z.B. Phenolresolharz-Pulver, und einem weiteren Bindemittel aus Pech mit einer hohen Erweichungstemperatur. Dem Trockengemenge kann zusätzlich ein Weichmacher, ein Metallpulver z.B. Si-Metallpulver als Antioxidans, ein Dispergiermittel z.B. Polyacrylsäure und Faserstoff zugemischt werden.

Die EP 0 469 786 A2 offenbart einen feuerfesten Versatz aufweisend ein Trockengemenge aus einem feuerfesten Rohstoff aus Magnesiumoxid, Graphit, Alkali, und Aluminiumpulver, ein bei Raumtemperatur härtendes flüssiges Harzbindemittel, sowie einen Wasseranteil. Das flüssige Harzbindemittel weist eine Phenolresolharz-Lösung, vorzugsweise mit einem wasserlöslichen Kaliumanteil von nicht mehr als 0,5 Gew.-%, und gegebenenfalls einen Esterhärter und/oder einen Weichmacher auf. Gemäß einem Verfahren zur Herstellung einer formbaren Masse aus dem feuerfesten Versatz werden die jeweiligen Bestandteile des Trockengemenges und die des flüssigen Bindemittels separat voneinander gemischt. Das Bindemittel wird anschließend dem Trockengemenge in entsprechender Menge zugesetzt. Die formbare Masse kann ferner hitzegehärtet und gegebenenfalls verkokt werden.

Aufgabe der Erfindung ist, einen feuerfesten Gießmassenversatz mit einem temporären, primären, kalthärtenden Bindemittel zu schaffen, das am Einsatzort des Gießmassenversatzes einfach zum Versatz zumischbar ist und das keine schädigenden Rückstände bei Temperatureinwirkungen verursacht, wobei der Versatz lediglich mit einer Flüssigkeit versetzt werden soll, um die Fließfähigkeit als Gießmasse zu bewirken.

Diese Aufgabe wird durch die Merkmale des Anspruchs 1 und 10 gelöst. Vorteilhafte Weiterbildungen der Erfindung werden in den von diesen Ansprüchen abhängigen Unteransprüchen gekennzeichnet.

Über die Zugabe der Graphitkomponente über einen später graphitierbaren Kohlenstoffträger, der sich mit dem Wasser bezüglich der Hydrophilie verträgt, können erfindungsgemäß die rheologischen Eigenschaften über die klassischen temporären Hilfsstoffe (Verflüssiger, Stellmittel, Binder usw.) eingestellt werden. Dadurch kann eine Kaltformgebung von kohlenstoffgebundenen Erzeugnissen realisiert werden.

Erfindungsgemäß wird ein Verfahren für die Herstellung von insbesondere MgO-kohlenstoffhaltigen Erzeugnissen durch wässrige Gießformgebung und/oder bildsame Formgebung dadurch realisiert, dass die Graphitkomponente über einen später verkokenden Kohlenstoffträger eingesetzt wird. Erfindungsgemäß kann dann die Einstellung der Viskosität und/oder der Fließgrenze und/oder der Thixotropie der Gießmassen oder bildsamen Massen über die Zugabe von Verflüssiger, Binder oder Stellmittel, wie sie bei den konventionellen Gießtechnologien von oxidhaltigen feuerfesten Gießmassen oder bildsamen Massen eingesetzt werden, erfolgen.

Im Temperaturbereich von ca. 800°C und höher verkokt der Kohlenstoffträger und übernimmt die Verfestigung der Gießmasse oder der bildsamen Masse. Erfindungsgemäß dienen Kunstharze, z. B. Novolake oder Resole, Peche oder Kunstpeche, z. B. ein Pechpulver wie Carbores^{®} oder Bitumen, z. B. ein Bitumenpulver wie Thermocarbon^{®}, oder Mischungen davon als später graphitierbare Kohlenstoffträger.

Um die Wirkung der feinen wasseranfälligen MgO-Körnung in MgO-kohlenstoffhaltigen Erzeugnissen zu entschärfen, wird erfindungsgemäß diese feine MgO-Körnung entweder mit feiner Körnung des später graphitierbaren Kohlenstoffträgers ersetzt oder die MgO-feine, wasseranfällige Körnung wird mit dem später graphitierbaren Kohlenstoffträger flüssiger Konsistenz oder flüssiger Konsistenz mit zusätzlicher Pulverzugabe vom später graphitierbaren Kohlenstoffträger warm unter 400°C oder kalt bei Raumtemperatur beschichtet. Über die Zugabe im wässrigen Dispergiermedium einer katalytisch aktiven Substanz flüssiger und/oder pulverartiger Konsistenz aus der Gruppe der leicht reduzierbaren Verbindungen der Übergangselemente, insbesondere Metallocene oder Metallobenzoate oder Metallonaphtenate des Kupfers, Chroms, Nickels oder Eisens in die Kunstharzkomponente wird ggf. erfindungsgemäß unter 1000°C ein kristallin hochgraphitierter Kohlenstoff erzeugt, der zu verbesserten chemischen Eigenschaften verhilft. Die Zugabe von keramischen Nanometerpartikeln oxidischer Natur z. B. TiO₂-Nanometerpulver und/oder nicht oxidischer Natur z. B. Ruß oder SiO₂-C können weiterhin erfindungsgemäß sowohl zur Reduzierung der Viskosität als auch der Fließgrenze beitragen als auch zu verbesserten mechanischen thermischen chemischen Eigenschaften verhelfen.

Als alleinige flüssige Komponente dient erfindungsgemäß in den Gießmassen oder bei den bildsamen Massen nur Wasser oder Alkohol oder Gemische aus Wasser und Alkohol mit oder ohne organische Lösungsmittel. Insbesondere aber wird Wasser verwendet. Erfindungsgemäß wird kein flüssiges Harz, sondern festes Pulverharz als sekundäres Bindemittel eingesetzt.

Erfindungsgemäß können durch den Zusatz von Nanometerpartikeln kohlenstoffhaltige Erzeugnisse über Gießverfahren oder über Strangpressverfahren erzeugt werden. Dazu zählen auch selbstfließende kohlenstoffhaltige Gießmassen.

Die Zugabe von hydraulisch abbindenden Bindemitteln, wie z. B. Tonerde-Zemente, kann zu einer zusätzlichen Verfestigung bei niedrigen Temperaturen (Hydratisierung von Calciumaluminatphasen) und bei höheren Temperaturen (keramische Sinterbindung) beitragen.

Ein derartiges Bindemittel wird aber nur dann verwendet, wenn das feuerfeste System der Gießmassen dies erfordert und keine Beeinträchtigung zu befürchten ist.

Die Zugabe von Al₂O₃ oder Spinellen oder ZrO₂ kann die mechanischen thermischen und chemischen Eigenschaften der basischen MgO-kohlenstoffhaltigen Gießmassen verbessern. Hierbei kann insbesondere der Feinkornbereich des hydratationsanfälligen Magnesiumoxids durch die genannten Stoffe ersetzt werden, sofern das feuerfeste System darunter nicht leidet.

Erfindungsgemäß können die basischen kohlenstoffhaltigen Gießmassen mit oder ohne Zementzugaben in Fertigbauteilen wie z. B. Schieberplatten, Steinen, usw. zum Einsatz gelangen.

Die Erfindung soll am nachfolgenden Ausführungsbeispielen näher erläutert werden.

Ausführungsbeispiele einer MgO-C-Gießmasse:
Erfindungsgemäß bestehen die Zusammensetzungen der basischen kohlenstoffhaltigen Gießmassen aus MgO-Körnungen mit einem für Gießmassen abgestimmten Körnungsband sowie aus den Kohlenstofflieferanten Graphit (in Pulver- oder Flockenform), Ruß und/oder den Kohlenstofflieferanten Pech bzw. anderen Kohlenstoffquellen wie z. B. modifizierten Produkten auf Basis von Steinkohleteerpech bzw. bitumenstämmiger Produkte dieser Art. Zur Ausfüllung des Feinkornbereichs der Massen werden die hydratationsanfälligen Feinkornanteile der MgO-Fraktion durch geeignete Fraktionen der Kohlenstoffquellen Graphit, Ruß, Koks und/oder der Kohlenstofflieferanten modifiziertes Steinkohleteerpech bzw. modifizierter bitumenstämmiger Produkte ersetzt. Weiterhin besteht, wie schon erwähnt, die Möglichkeit den Feinkornbereich der MgO-Körnung durch Aluminiumoxid und/oder Mg-Al-Spinell und/oder Zirkonoxid mit geeigneter Kornverteilung zu ersetzen.

Als Beispiel für einen Versatz einer basischen Gießmasse ist im weiteren ein Masseversatz mit Thermocarbon^{®}, einem modifizierten bitumenstämmigen Produkt dargestellt worden. Äquivalent dazu kann dieses auf Bitumen basierte Produkt durch CarboresP^{®}, ein modifiziertes Steinkohlenpecherzeugnis, ersetzt werden. Beide Produkte werden in Pulverform verwendet.

Mengenmäßig besteht die Gießmasse zum größten Teil aus der im Körnungsband für Gießmassen abgestimmten oxidischen Komponente Magnesiumoxid in Form von Schmelzmagnesia oder einem hohen Anteil monokristalliner Körner und einer Reinheit von 97 Gew.-% MgO. Im unteren Kornbereich ist der hydratationsanfällige Feinkornanteil des Magnesiumoxids durch die Fraktion der verschiedenen Kohlenstoffträger Graphit, Petrolkoks bzw. Lieferanten Thermocarbon bzw. CarboresP ersetzt. Zur Einstellung der benötigten rheologischen Eigenschaften werden Netzmittel und Verflüssiger eingesetzt. Dabei handelt es sich um flüssige Präparate auf der Basis einer Carbonsäurezubereitung (Dolapix^{®}

PC67) und/oder Ammoniumpolymethacrylat (Darvan7^{®} ). Des Weiteren wird Ammonium-Ligninsulfonat in Pulverform zugesetzt, welches im zugegebenen Anmachwasser gelöst hervorragende verflüssigende Eigenschaften im Hinblick auf die Kohlenstofflieferanten Thermocarbon bzw. CarboresP zeigt.

Ein besonders effektiver nahezu lückenloser Übergang der temporären primären und sich über einen weiten Temperaturbereich von z. B. 25 bis 200°C erstreckenden Bindung zur nachfolgenden Kohlenstoffbindung aus dem sekundären Bindemittel ist gegeben, wenn als sekundäres pulverförmiges Bindemittel ein modifiziertes bitumenstämmiges Produkt mit der Bezeichnung "Thermocarbon^{®}" (Vertrieb: S & B Industrial Minerals GmbH, OTAVI Minerals, Bockholdstr. 129, 41460 Neuss, Germany) oder ein auf Bitumen basierendes Produkt mit der Bezeichnung "CarboresP^{®}" (Vertrieb: Rütgers Chemicals, Heideäcker 3, 63457 Hanau, Germany) verwendet wird.

Ligninverbindungen können eine verflüssigende Wirkung bei Wasserzugabe gewährleisten und tragen dadurch positiv zur Verformbarkeit der Gießmasse bei.

Im Rahmen der erfindungsgemäßen Aufgabenstellung ist ein sehr wirksames primäres temporäres kalt abbindendes Bindemittelsystem aufgefunden worden, das die gewünschten Eigenschaften des feuerfesten Endprodukts nicht beeinträchtigt und auch keine artfremden Rückstände bei Einwirkung höherer Temperaturen hinterlässt, vielmehr eine temporäre primäre Kaltabbindebindung und eine Bindung bis zur Wärmehärtung des sekundären Bindemittels bewirkt. Dieses kalt abbindende Bindemittelsystem ist ein bei Raumtemperatur härtendes flüssiges Kunstharzbindemittelsystem und besteht aus einem flüssigen Kaliumhydroxid (KOH)-modifizierten Phenolresol (z.B. Bakelite PF6290GN) (Vertrieb: Hexion, Gennaerstr. 2-4, 58642 Iserlohn) und einem Estergemisch (z. B. Bakelite H6167H) (Vertrieb: ebenfalls Hexion). Dieses Bindemittelsystem wird hauptsächlich für Gießkerne in der Gießereitechnik verwendet. Die Gießkerne werden bekanntlich z. B. durch Vibrationseinwirkungen zerrieselt. Die Verwendbarkeit für den erfindungsgemäßen Zweck ergibt sich aus den bisherigen Verwendungen nicht. Überraschend ist, dass Komponenten des Bindemittelsystems nach der Kalthärtung bei Temperatureinwirkungen eine Bindung gewährleisten, die bis zur Wärmehärtung bzw. Koksbindung des sekundären Bindemittels ausreicht und in Kombination mit dem sekundären Bindemittel die gesamte Koksbindung verstärkt. Offenbar wirkt der Kohlenstoff aus den primären Bindemitteln keimbildend für die Wärmehärtung und/oder Verkokung des sekundären Bindemittels. Dieses primäre Bindemittelsystem wirkt besonders effektiv mit den sekundären Bindemitteln Carbores und Thermocarbon.

Die Erfindung sieht somit für Gießmassenversätze zwei organische Bindemittel bzw. Bindemittelsysteme vor, von denen das eine kalt abbindet und eine Bindung bei Temperaturerhöhung bis z. B. 200°C gewährleistet und nur Kohlenstoff bei Temperaturerhöhungen hinterlässt und von denen das andere in an sich bekannter Weise bei Temperaturerhöhung z. B. ab 120°C eine bindende Flüssigphase und ab 600°C eine sich daraus entwickelnde Koksbindung erzeugt. Die Versätze werden lediglich noch mit Wasser oder Alkohol oder Gemischen aus beiden Flüssigkeiten zur Einstellung der erwünschten Rheologie versetzt, wobei bei Verwendung des KOH-modifizierten Phenolresols und des Estergemisches in vorteilhafter Weise lediglich Wasser zur Einstellung der Rheologie erforderlich ist. Da die erfindungsgemäßen primären Bindemittel bei Temperaturerhöhung keine schädigenden Rückstände erzeugen, sind sie für nahezu alle feuerfesten Gießmassenzusammensetzungen verwendbar, so dass die gewünschten Eigenschaften der Gießmassen optimal auf der Basis des Typs ihrer feuerfesten Rohstoffe einstellbar sind.

Nach der Erfindung werden die beiden flüssigen Bestandteile des Bindemittels jeweils getrennt in bestimmten Mengen in einem Versatzgebinde mit gewichtsmäßig abgefülltem Trockengemenge des feuerfesten Versatzes getrennt vom Trockengemenge vorgesehen. Das Zumischen des Bindemittels erfolgt dann am Einsatzort des Versatzes unter zusätzlichem Zumischen von lediglich Wasser für die gewünschten rheologischen Eigenschaften der Gießmasse. Da die Zusatzmengen des Bindemittels relativ gering sind, wird erfindungsgemäß ein Bestandteil des flüssigen Bindemittels dem Trockengemenge beigemischt, ohne dass sich eine verflüssigende Wirkung einstellt. Der andere flüssige Bestandteil wird in einem Beipackbehältnis im Versatzgebinde mit gewichtsmäßig abgefülltem Trockengemenge des feuerfesten Versatzes getrennt vom Trockengemenge vorgesehen. Das Zumischen des Bindemittels erfolgt dann am Einsatzort des Versatzes unter zusätzlichem Zumischen von lediglich Wasser für die gewünschten rheologischen Eigenschaften der Gießmasse. Da die Zusatzmengen des Bindemittels relativ gering sind, kann vorteilhafterweise ein Bestandteil des flüssigen Bindemittels dem Trockengemenge beigemischt werden, ohne dass sich eine verflüssigende Wirkung einstellt.

Bezogen auf die Trockensubstanz werden Bindemittelmengen des flüssigen primären Bindemittels von 1 bis 6 Gew.-%, insbesondere von 2 bis 4 Gew.-% vorgesehen.

Die Trockengemenge enthalten hauptsächlich die feuerfesten Rohstoffgranulate und das sekundäre, unter Temperatureinwirkung härtende und verkokende Bindemittel in Pulverform homogen verteilt. Des Weiteren sind erfindungsgemäße trockene Versätze vorgesehen, die zusätzlich trockene Kohlenstoffträger, z. B. in Form von Ruß und/oder Graphit enthalten. Des Weiteren enthalten die trockenen Versätze zweckmäßigerweise Antioxidantien. Sie enthalten zudem erfindungsgemäß Additive zur Überwindung der Hydrophobie der Kohlenstoffträger (Netzmittel).

Diese sind z. B. oberflächenaktive Substanzen wie Dolapix^{®} (Vertrieb: Zschimmer & Schwarz GmbH & Co. KG Chemische Fabriken, Max-Schwarz-Str. 3-5, D-56112 Lahnstein) und/oder Darvan^{®} (Vertrieb: R.T. Vanderbilt Company, Inc., 30 Winfield Street, Norwalk, CT 06855, USA).

Es liegt im Rahmen der Erfindung, die Ligninverbindungen mit den genannten flüssigen primären Bindemitteln zu kombinieren, wobei das Ligninsulfonat seine verflüssigende Wirkung gewährleistet.

Die folgende Tabelle 1 enthält beispielhaft besonders vorteilhafte Zusammensetzungen von erfindungsgemäßen trockenen Versätzen für erfindungsgemäße Gießmassen.

**Tabelle 1**

| **Bestandteil** | **Mengen in Gew.-%** |
|---|---|
| Rohstoffgemenge insbesondere | |
| Magnesia: Körnung: 0,1-4mm | 60 bis 90 insbes. 75 bis 85 |
| (MgO) < 0,1 mm | 5 bis 35 insbes. 15 bis 25 |
| | |
| Graphit | 0,5 bis 10 insbes. 3 bis 6 |
| Koks (feingemahlen) | 0,5 bis 5 insbes. 3 bis 6 |
| Ruß | 0,5 bis 5 insbes. 3 bis 6 |
| Sekundäres Bindemittel: | |
| Thermocarbon^{®} | 1 bis 10 insbes. 3 bis 5 |
| oder | 1 bis 10 insbes. 3 bis 5 |
| Carbores^{®} | |
| | |
| Primäres Bindemittel: | |
| | |
| flüssiges KOH-mod.Phenolresol-harz + flüssiges Estergemisch | 0,5 bis 6 insbes. 2 bis 4 |
| Additive gegen Hydrophobie: | |
| Dolapix^{®} | 0,1 bis 1 insbes. 0,25 bis 0,6 |
| Darvan^{®} | 0,1 bis 1 insbes. 0,25 bis 0, 6 |
| Antioxidantien | 1 bis 5 insbes. 2 bis 3 |

Die Zusammensetzungen der Tabelle 1 gelten auch für andere basische feuerfeste erfindungsgemäße Versätze, z. B. auf Basis von Doloma (CaO/MgO) oder Calcia (CaO). Für andere Zusammensetzungen, die bezüglich ihrer feuerfesten Eigenschaften auch noch weitere kalkbindende Bestandteile, wie z. B. Tonerdezement, Tone, Phosphate, Silikate, Si-Stoffe od. dgl. vertragen, ohne dass ihre Eigenschaften beeinträchtigt werden, können andere Zusammensetzungen infrage kommen, wobei aber hauptsächlich die angegebenen erfindungsgemäßen primären Bindemittel verwendet werden, um die eingestellten feuerfesten Eigenschaften der Gießmassen oder der aus den Gießmassen in situ, d. h. in eingebautem Zustand sich bildenden feuerfesten Produkte nicht zu verändern.

Zur Herstellung der kohlenstoffgebundenen Gießmassen z. B. auf der Basis von MgO ist es erforderlich, ein Abbinden in wirtschaftlich sinnvoller zeit zu erreichen. Dies wird durch die Erfindung gewährleistet. Zum Einsatz kommt ein flüssiges zweikomponentiges System eines kaltabbindenden Harzes. Durch geeignete Wahl der Komponenten sowie deren Massenanteile ist es möglich, die Verarbeitungszeit der Masse an das jeweilig erforderliche Verarbeitungsfenster anzupassen. Da die verwendeten Harzsysteme einen geringen Restkohlenstoffgehalt aufweisen, wird durch die Zugabe einer weiteren Kohlenstoffkomponente, z. B. eines später graphitierbaren modifizierten steinkohlenteerstämmigen Peches, die eigentliche Kohlenstoffbindung beim Verkoken erreicht (Verkokung in flüssig/Gasphase). Der Beitrag des primären Bindersystems ist hierbei nur gering. Aufgrund des Einsatzes des auf Kunstharz basierenden primären Bindersystems in Kombination mit dem eigentlichen, die Kohlenstoffbindung liefernden Systems, ist es möglich, auf herkömmliche primäre Bindesysteme wie Phosphatbindung, Bindung durch hydratisierbare Binder wie Tonerdezement oder hydratisierbare Tonerde u.a. zu verzichten. Dadurch kann ein nahezu nur auf Kohlenstoff und z. B. Magnesiumoxid basierendes System erzeugt werden, das wesentlich bessere Korrosionseigenschaften besitzt als ein mit den oben genannten primären Bindersystemen "verunreinigtes" System.

Zum Erreichen eines geforderten Gesamtkohlenstoffgehaltes ist es möglich, weitere Kohlenstoffquellen wie z.B. Ruß, natürlichen oder synthetischen Graphit, Kunstharze in Pulverform usw. zuzusetzen.

## Patentansprüche

1. Gebinde mit einem feuerfesten Gießmassenversatz aus einem Trockengemenge aus mindestens einem feuerfesten Rohstoff, insbesondere mindestens einem basischen feuerfesten Rohstoff, insbesondere aus Sintermagnesia und/oder Schmelzmagnesia (MgO), sowie mindestens einem kalt härtenden primären Bindemittel und mindestens einem unter Temperatureinwirkung wärmehärtenden, eine Kohlenstoffbindung bewirkenden sekundären Bindemittel, wobei aus gebrochenen Rohstoffgranulaten vorbestimmte Kornfraktionen mit vorgegebenen Rohstoff- und Körnungsrezepturen, ggf. unter Zusatz von Mehlkorn zu einem Rohstoffgemenge zusammengestellt sind,
**dadurch gekennzeichnet, dass**
- mindestens ein kalt abbindendes primäres Bindemittel vorhanden ist,
- das kalt abbindende primäre Bindemittel ein flüssiges, zweikomponentiges, bei Raumtemperatur härtendes Harzbindemittelsystem aus zwei flüssigen Bestandteilen ist,
- ein Bestandteil im Gebinde in einem getrennten Beipackbehältnis getrennt vom Trockengemenge abgepackt vorliegt und der andere Bestandteil dem Trockengemenge beigemischt ist und
- das Trockengemenge ein Netzmittel enthält.

2. Gebinde nach Anspruch 1 ,
**dadurch gekennzeichnet**
**dass** das kalt härtende Kunstharzbindemittelsystem ein Phenolresolharzbindemittelsystem ist.

3. Gebinde nach Anspruch 2,
**dadurch gekennzeichnet ,**
**dass** das Phenolresolharzbindemittelsystem aus einem flüssigen Kaliumhydroxid (KOH)-modifizierten Phenolresol und einem getrennt davon gehaltenen, flüssigen Härter aus einem Estergemisch besteht.

4. Gebinde nach Anspruch 2 und/oder 3,
**dadurch gekennzeichnet ,**
**dass** das Phenolresolharzbindemittelsystem in Mengen von 0,5 bis 6 Gew.-%, insbesondere von 2 bis 4 Gew.-%, bezogen auf das trockene Rohstoffgemenge (= 100%) enthalten ist.

5. Gebinde nach einem oder mehreren der Ansprüche 1 bis 4, **dadurch gekennzeichnet ,**
**dass** es als sekundäres Bindemittel ein kohlenstoffhaltiges carbonisierendes eine Koksstruktur bildendes, wärmehärtendes Harzpulver enthält (z. B. ein modifiziertes Steinkohlenpecherzeugnis (Pechpulver) wie CarboresP^{®} ), insbesondere in Mengen von 1 bis 10 Gew.-%, vorzugsweise von 3 bis 5 Gew.-%, bezogen auf das trockene Rohstoffgemenge (= 100%).

6. Gebinde nach Anspruch 5,
**dadurch gekennzeichnet,**
**dass** es als sekundäres Bindemittel ein modifiziertes bitumenstämmiges Produkt (Bitumenpulver) z. B. Thermocarbon - Pulver, insbesondere in Mengen von 1 bis 10 Gew.-%, vorzugsweise 3 bis 5 Gew.-%, bezogen auf das trockene Rohstoffgemenge (=100%) enthält.

7. Gebinde nach einem oder mehreren der Ansprüche 1 bis 6,
**dadurch gekennzeichnet,**
**dass** es einen zusätzlichen pulverförmigen Kohlenstoffträger, insbesondere Graphit und/oder Ruß, vorzugsweise in Mengen von 0,5 bis 10 Gew.-%, insbesondere von 3 bis 6 Gew.-%, bezogen auf das trockene Rohstoffgemenge (=100%) enthält.

8. Gebinde nach einem oder mehreren der Ansprüche 1 bis 7,
**dadurch gekennzeichnet,**
**dass** es als Netzmittel ein Natriumsalz einer Polycarbonsäure (Dolapix^{®} ) oder ein wässriges Natriumpolymethacrylat (Darvan^{®} ), vorzugsweise in Mengen von 0,1 bis 1 Gew.-%, insbesondere von 0,25 bis 0,6 Gew.-%, bezogen auf den Graphit- und/oder Russgehalt, enthält.

9. Gebinde nach einem oder mehreren der Ansprüche 1 bis 8,
**dadurch gekennzeichnet,**
**dass** es Antioxidantien in Mengen von 1 bis 5 Gew.-%, insbesondere von 2 bis 3 Gew.-%, bezogen auf das trockene Rohstoffgemenge (= 100%) enthält.

10. Aus einem Gebinde nach einem oder mehreren der Ansprüche 1 bis 9 hergestellte Gießmasse, die von 4 bis 10 Gew.-%, insbesondere von 5 bis 7 Gew.-% Wasser enthält.

## Claims

1. A container with a refractory casting compound batch made from a dry mixture formed from at least one refractory raw material, in particular at least one basic refractory raw material, in particular made from sintered magnesia and/or fused magnesia (MgO), and at least one cold-curing primary binder and at least one secondary binder which hot-cures under the action of temperature and brings about a carbon bond,
with predetermined grain fractions with specified raw-material and grain formulations being put together from broken raw-material granules, optionally with the addition of fines, to form a raw-material mixture,
**characterised in that**
- at least one cold-setting primary binder is present,
- the cold-setting primary binder is a liquid, dual-component resin binder system formed from two liquid constituents which cures at room temperature,
- one constituent in the container is present packed separately from the dry mixture in a separate accessory receptacle, and the other constituent is admixed to the dry mixture,
and
- the dry mixture contains a wetting agent.

2. A container according to Claim 1, **characterised in that** the cold-curing synthetic resin binder system is a phenol resol resin binder system.

3. A container according to Claim 2, **characterised in that** the phenol resol resin binder system consists of a liquid potassium hydroxide (KOH)-modified phenol resol and a liquid hardener, kept separately therefrom, consisting of an ester mixture.

4. A container according to Claim 2 and/or 3, **characterised in that** the phenol resol resin binder system is contained in amounts of 0.5 to 6% by weight, in particular of 2 to 4% by weight, relative to the dry raw-material mixture (= 100%).

5. A container according to one or more of Claims 1 to 4, **characterised in that** it contains as secondary binder a carbon-containing carbonising, hot-curing resin powder which forms a coke structure (e.g. a modified coal-tar pitch product (pitch powder) such
as CarboresP®), in particular in amounts of 1 to 10% by weight, preferably of 3 to 5% by weight, relative to the dry raw-material mixture (= 100%).

6. A container according to Claim 5, **characterised in that** it contains as secondary binder a modified bitumen-derived product (bitumen powder), e.g. Thermocarbon® powder, in particular in amounts of 1 to 10% by weight, preferably 3 to 5% by weight, relative to the dry raw-material mixture (= 100%).

7. A container according to one or more of Claims 1 to 6, **characterised in that** it contains an additional powdered carbon carrier, in particular graphite and/or soot, preferably in amounts of 0.5 to 10% by weight, in particular of 3 to 6% by weight, relative to the dry raw-material mixture (= 100%).

8. A container according to one or more of Claims 1 to 7, **characterised in that** it contains as wetting agent a sodium salt of a polycarboxylic acid (Dolapix®) or an aqueous sodium polymethacrylate (Darvan®), preferably in amounts of 0.1 to 1% by weight, in particular of 0.25 to 0.6% by weight, relative to the graphite and/or soot content.

9. A container according to one or more of Claims 1 to 8, **characterised in that** it contains antioxidants in amounts of 1 to 5% by weight, in particular of 2 to 3% by weight, relative to the dry raw-material mixture (= 100%).

10. A casting compound produced from a container according to one or more of Claims 1 to 9, which compound contains from 4 to 10% by weight, in particular from 5 to 7% by weight, water.

## Revendications

1. Récipient comprenant un mélange pour masse de coulée réfractaire constitué d'un mélange sec constitué d'au moins une matière première réfractaire, en particulier d'au moins une matière première réfractaire basique, en particulier de magnésie frittée et/ou de magnésie fondue (MgO), ainsi que d'au moins un liant primaire durcissant à froid et d'au moins un liant secondaire durcissant à chaud sous l'action de la température, entraînant une liaison carbone, dans lequel des fractions granulométriques prédéterminées à partir de granulats de matières premières broyés sont mélangées à des formulations de matières premières et de grains prédéfinies, éventuellement en ajoutant de la farine, pour former un mélange de matières premières,
**caractérisé en ce que**
- au moins un liant primaire à prise à froid est présent,
- le liant primaire à prise à froid est un système liquide de liant à base de résine à deux composants, durcissant à la température ambiante et constitué de deux composants liquides,
- un composant est présent dans le récipient dans un contenant séparé, emballé séparément du mélange sec, et **en ce que** l'autre composant est mélangé au mélange sec, et
- le mélange sec contient un agent mouillant.

2. Récipient selon la revendication 1,
**caractérisé en ce que**
le système de liant à base de résine synthétique durcissant à froid est un système de liant phénolique à base de résine de type résol.

3. Récipient selon la revendication 2,
**caractérisé en ce que**
le système de liant à base de résine phénolique de type resol est constitué d'un acide phénolique de type résol liquide modifié à l'hydroxyde de potassium (KOH) et d'un agent durcissant liquide constitué d'un mélange d'esters, maintenu séparément dudit résol phénolique.

4. Récipient selon la revendication 2 et/ou 3,
**caractérisé en ce que**
le système de liant à base de résine résol phénolique est contenu en des quantités allant de 0,5 à 6 % en poids, en particulier allant de 2 à 4 % en poids, rapporté au mélange sec de matières premières (≈ 100 %).

5. Récipient selon l'une quelconque ou plusieurs des revendications 1 à 4, **caractérisé en ce que**
il contient comme liant secondaire, une poudre de résine contenant du carbone, à action de carbonisation, formant une structure de coke, durcissant à chaud (par exemple un produit de brai de charbon de terre modifié (poudre de brai) tel que le CarboresP®), en particulier en des quantités allant de 1 à 10 % en poids, de préférence allant de 3 à 5 % en poids, rapporté au mélange sec de matières premières (= 100 %).

6. Récipient selon la revendication 5,
**caractérisé en ce que**
il contient en tant que liant secondaire un produit modifié issu du bitume (poudre de bitume) tel que par exemple de la poudre de Thermocarbon®, en particulier en des quantités allant de 1 à 10 % en poids, de préférence allant de 3 à 5 % en poids, rapporté au mélange sec de matières premières (= 100 %).

7. Récipient selon l'une quelconque ou plusieurs des revendications 1 à 6, **caractérisé en ce que**
il contient un support de carbone supplémentaire pulvérulent, en particulier du graphite et/ou du noir de carbone, de préférence en des quantités
allant de 0,5 à 10 % en poids, en particulier allant de 3 à 6 % en poids, rapporté au mélange sec de matières premières (= 100 %).

8. Récipient selon l'une quelconque ou plusieurs des revendications 1 à 7, **caractérisé en ce que**
il contient en tant qu'agent mouillant un sel de sodium d'un acide polycarboxylique (Dolapix®) ou un polyméthacrylate de sodium aqueux (Darvan®), de préférence en des quantités allant de 0,1 à 1 % en poids, en particulier allant de 0,25 à 0,6 % en poids, rapporté à la teneur en graphite et/ou en noir de carbone.

9. Récipient selon l'une quelconque ou plusieurs des revendications 1 à 8, **caractérisé en ce que**
il contient des antioxydants en des quantités allant de 1 à 5 % en poids, en particulier de 2 à 3 % en poids, rapporté au mélange sec de matières premières (= 100 %).

10. Masse de coulée obtenue à partir d'un récipient selon l'une quelconque ou plusieurs des revendications 1 à 9, laquelle masse de coulée contient de 4 à 10 % en poids, en particulier de 5 à 7 % en poids d'eau.
